# EUROPEAN PATENT APPLICATION

(11) **EP 4 769 014 A1**
(43) Date of publication of application: **01.07.2026**
(21) Application number: 24223823.6
(22) Date of filing: 31.12.2024
(51) Int. Cl.: G02F 1/11, G02F 1/33, G02F 1/125, H01S 3/00

(54) **FIBERIZED ACOUSTO-OPTIC DEVICE FOR SHIFTING A FREQUENCY OF LIGHT**

(71) Applicant: Foundation For Research And Technology Hellas, 70013 Heraklion, Crete (GR)
(72) Inventor: Von Klitzing, Wolf, 700 13 Heraklion, Crete (GR)
(74) Representative: Araujo, Daniel

(57) **Abstract**

A fiberized acousto-optic device for shifting a frequency of light, comprising: a first optical fiber section that is configured to receive light; a fiber beam splitter (3) connected to the first optical fiber section (2a); a second optical fiber section (2b) connected to the fiber beam splitter (3); an acousto-optic modulator (5) which is optically coupled the second optical fiber section (2b) and is configured to shift a frequency of at least a portion of the light, thereby producing shifted light (SL); a retroreflector (7) optically coupled to the acousto-optic modulator (5) and configured to receive the shifted light (SL) and reflect at least part of it back to the acousto-optic modulator (5) which is further configured to transmit at least part of the reflected light towards the second fiber section; a third optical fiber section (2c) connected to the fiber beam splitter (3).

## Description

### Technical Field

The present disclosure concerns a fiberized acousto-optic device for shifting a frequency of light. The device is considered to be fiberized because it comprises a number of optical fiber sections. The acousto-optic device may also be called acousto-optic frequency shifter or frequency shifter or optical frequency shifter. Also, the device may be a system for shifting a frequency of light.

### Background

In the prior art there are known acousto-optic devices which comprise acousto-optic modulators for shifting a frequency of light. These devices may also be called frequency shifters or optical frequency shifters. Some of the known conventional optical frequency shifters are fiberized in the sense that they comprise optical fiber sections via which an input light is provided to the device, and an output signal which comprises light of shifted frequency compared to the input light is outputted by the device when the latter is in operation. It is noted that a fiberized device or system apart from optical fibers may also comprise non-fiber components such as for example free-space optical components. An advantage of the fiberized frequency shifters compared to their non-fiberized counterparts, is that the former are often more robust and compact compared to the latter. Moreover, the fiberized frequency shifters may be easily integrated or be used in fiberized optical systems for variety of different applications such as, for example, for use in quantum technology, material characterization, telecommunications or other applications.

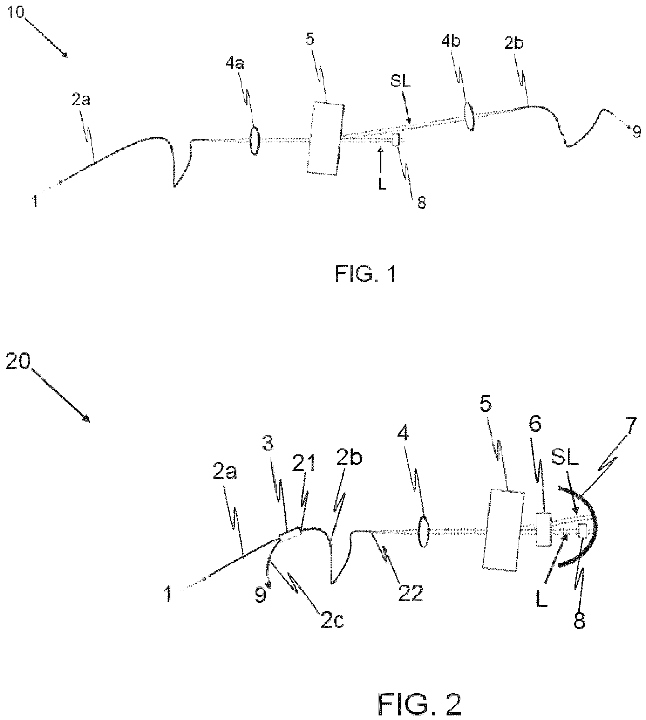

A known from the prior art conventional frequency shifter is shown in Fig. 1 and comprises a first optical fiber section 2a via which an input light 1 is provided to the shifter. In the device (shifter) 10 of Fig. 1, the first optical fiber section 2a is optically coupled via a first lens 4a to an acousto-optic modulator 5 which shifts a frequency of a portion of the input light, thereby outputting a shifted light SL which exits the modulator 5 and is directed towards a second optical fiber section 2b which is optically coupled to the modulator 5 via a second lens 4b. Hence, the shifted light SL is coupled into the second optical fiber section 2b and can be extracted as an optical output 9 (output signal) of the device 10. Also, in the device 10 of Fig. 1 the modulator 5 produces an additional output which comprises unshifted (i.e. non-shifted) light L which is blocked by a optical block 8 (i.e. a block or blocker) of the device. It is noted that in the device of Fig. 1 the shifted light SL is deflected compared to the direction of the unshifted light L such that the block 8 blocks the unshifted light L but does not block the shifted light SL that is directed towards the second optical fiber section 2b of the shifter 10.

Despite their advantages, an important drawback of many of the conventional fiberized frequency shifters such as the one of Fig. 1 is that they require that the frequency of the input light is changed/shifted by the modulator by a specific amount. Consequently, if the frequency does not change by that specific amount, then the shifter does not work properly or does not work at all. In the device/shifter 10 of Fig. 1 the aforementioned drawback is related to the fact that the device 10 comprises two optical fiber optic sections 2a, 2b which are separately coupled to the acousto-optic modulator 5 via the two respective lenses 4a, 4b. Consequently, the shifter 10 of Fig. 1 requires that the shifted light SL that exits the modulator 5 has been shifted, compared to the frequency of the input light 1, by a specific amount that causes that the shifted light SL is deflected compared to the unshifted light L by a specific angle of deflection which allows for the shifted light SL to be efficiently coupled into the second optical fiber section 2b. Therefore, in the shifter 10 of Fig. 1, if the frequency shifts by a different amount compared to the one that is required for the optical coupling of the second optical fiber section 2b to the modulator 5, then the shifter may not work properly or may not work at all. Hence, there is a need for a fiberized optical frequency shifter which overcomes the aforementioned drawback of the conventional ones, and allows for tuning the frequency of the light by an adjustable amount without losing fiber coupling.

### Summary of the Invention

The solution provided by the present invention may advantageously allow for using a fiberized frequency shifter for changing the frequency of the light by an adjustable amount without losing the fiber coupling within the shifter. Consequently, the present invention may advantageously allow for providing a fiberized acousto-optic device which may cause the frequency or wavelength of the light that is inputted to the device to change by an amount that can be tuned or adjusted. Hence, the present invention may advantageously provide a fiberized optical frequency shifter that is compact and robust and at the same time is versatile and can be used for different applications that may require the shifter to cause different amounts of shift of the light's frequency or wavelength. Also, the fiberized shifter offered by the present invention may advantageously exhibit a stable operation and a configuration that is not complex nor expensive to produce, especially when compared with the conventional fiberized shifters.

Moreover, at least some embodiments of the present invention may advantageously allow for simultaneously effectuating a plurality of different frequency shifts such that multiple frequencies can be imprinted at the same time to an optical output of the shifter. Also, at least some embodiments of the present invention may advantageously allow for controlling the intensity of the light, and particularly of the shifted light, coming out of the shifter. Such a control over the intensity of the light being outputted by the shifter may advantageously further allow creating pulses of light from a DC light source, or picking individual pulses of light from a train of multiple pulses of light.

The present invention in one aspect concerns a fiberized acousto-optic device for shifting a frequency of light, the device comprising: a first optical fiber section that is configured to receive light; a fiber beam splitter which comprises a first port via which the fiber beam splitter is connected to the first optical fiber section and is configured to receive from the latter the light; a second optical fiber section which comprises a first end which via a second port of the fiber beam splitter is connected to the latter and is configured to receive the light; an acousto-optic modulator which is optically coupled to a second end of the second optical fiber section and is configured to receive from the latter the light and simultaneously shift a frequency of at least a portion of the light, thereby producing shifted light, and transmit towards a retroreflector the shifted light.

The device also comprises the retroreflector which is optically coupled to the acousto-optic modulator and configured to receive the shifted light and reflect at least part of it back to the acousto-optic modulator which is further configured to transmit at least part of the reflected light towards the second end of the second fiber section. In the device, the second optical fiber section is further configured to receive the transmitted reflected light and direct it towards the fiber beam splitter which is configured to receive the transmitted reflected light and output at least part of the latter via a third port of the fiber beam splitter. Also, the device comprises a third optical fiber section connected to the third port of the fiber beam splitter. It is noted that the acousto-optic device of the first aspect of the invention may also be called frequency shifter or optical frequency shifter or shifter. Also, it may be understood that the frequency change that is caused by the device to the light received by the device, i.e. to the input light that is being inputted to the device when the latter is in operation, corresponds to a shift in a wavelength of the light.

Due to the fact the device of the first aspect invention involves the same optical fiber section, namely the second optical fiber section, for both providing to the acousto-optic modulator the input light the frequency of which is to be shifted, and receiving from the acousto-optic modulator at least a part (i.e. portion) of the shifted light, advantageously, the device may allow for the frequency shift (change) to be adjusted or tuned, at least to some extent, without the tuning of the frequency shift resulting to a loss of the optical coupling between the second optical fiber section and the acousto-optic modulator. This advantage of the device according to the invention is related to the device's aforementioned configuration which is substantially less complex and easier to assemble compared to the configurations of several of the conventional shifters of the prior art, and involves the use of the first, second and third optical fiber sections, the fiber beam splitter, the acousto-optic modulator coupled to the second optical fiber section, and the retroreflector. The aforementioned configuration of the device of the present invention may advantageously allow for the device to exhibit a good, robust, stable and highly versatile operation which may in turn be leveraged for the efficient use of the device in a variety of different applications such as in quantum technologies, experimental physics, optical communications, imaging, laser cooling and trapping in atomic physics, quantum optics, quantum information, telecommunications or in other applications.

In a preferred embodiment of the invention, the acousto-optic modulator is further configured to control an intensity of the shifted light, and more preferably the acousto-optic modulator may dynamically control the intensity of the shifted light. In the latter case, preferably the acousto-optic modulator is drivable (i.e. is configured to be driven) by a radio frequency (RF) signal and is also configured to, according to the frequency signal, dynamically control the intensity of the shifted light via controlling the portion of the light of which the frequency is shifted. In the latter preferred embodiment, the shifter may advantageously offer dynamic control over the proportion of the light that is outputted by the shifter relatively to the total amount of the light that the shifter receives as an input. This may in turn allow for advantageously using the shifter as means for creating pulses of light from a DC light source, in the optional case that such DC light source is used for providing to the shifter the input light, or for picking individual pulses of light from a train of multiple pulses of light, in the optional case that such train of pulses is the input light provided to the shifter.

In a very preferred embodiment of the invention, hereafter referred to as "first exemplary embodiment", the device further comprises a polarization rotator which is (i.e. is located) at an optical path followed by the shifted light or the reflected light between the retroreflector and the fiber beam splitter. This polarization rotator is an optional component which may advantageously increase the portion (i.e. the part) of the shifted light that is eventually coupled into, and output by, the third optical fiber section during an operation of the device.

For this purpose, more preferably, in addition to including in the shifter the aforementioned polarization rotator, the fiber beam splitter is also polarizing.

The optional yet preferable option of the device's fiber beam splitter being polarizing and be used in combination with the aforementioned polarization rotator be included in the device, may result to substantially optimizing and increasing the intensity of the output signal that can be provided by the device.

Hence, it may be understood that, overall, the polarization rotator is an optional element that may advantageously improve the quality of an output signal of the device via changing the polarization of at least some of the shifted light, compared to the polarization of the light that is inputted to the device via the latter's first optical fiber section. This change of the polarization of the shifted light may improve the quality of the output signal and of the overall operation of the device, because it is possible that in the device components of light with mismatched polarization may propagate alongside the frequency-shifted beam (i.e. the beam of light that comprises at least part of the shifted light), potentially causing interference or noise. However, the aforementioned polarization rotator is an optional component which may advantageously contribute to reducing the aforementioned possible interference or noise issues, enhancing signal quality.

Moreover, in at least some optional cases, the acousto-optic modulator or other parts of the device may cause changes in the polarization of the light that propagates through the device, in which case the aforementioned optional polarization rotator may advantageously be used for compensating for such changes of the polarization of the propagated light, and for ensuring compatibility of the polarization state of the of the device's output signal with any potentially present downstream optical components or subsequent optical processing steps.

Preferably, the aforementioned optional polarization rotator is or comprises any of is a waveplate, or a quarter-waveplate or a Faraday rotator. Also, the aforementioned polarization rotator may optionally be located in the device in one of various positions between the fiber beam splitter and the retroreflector. For example, in a preferred embodiment which is according to the aforementioned first exemplary embodiment, the polarization rotator is between the acousto-optic modulator and the retroreflector. In another preferred embodiment which is according to the aforementioned first exemplary embodiment, the polarization rotator is between the acousto-optic modulator and the second end of the second optical fiber section. In yet another preferred embodiment which is according to the aforementioned first exemplary embodiment, the second optical fiber section comprises the polarization rotator which is along the second optical fiber section. In each of the latter three preferred embodiments, the polarization rotator may preferably cause a change of the polarization of the shifted light that exits the acousto-optic modulator and travels towards being outputted by the device.

In a preferred embodiment of the invention, the device further comprises coupling means configured to optically couple the acousto-optic modulator to the second end of the second optical fiber section. More preferably the coupling means comprise any of a lens, a coupling lens, a collimation lens or a mirror.

The coupling means is an optional feature that may advantageously optimize the performance of the shifter via facilitating and improving the optical coupling between the second optical fiber section and the acousto-optic modulator.

In a very preferred embodiment of the invention, hereafter referred to as "second exemplary embodiment", the acousto-optic modulator is further configured to transmit without shifting the frequency of, some of the light that the acousto-optic modulator receives from the second optical fiber section when the device is in operation, thereby the acousto-optic modulator outputting unshifted light in addition to the shifted light. The unshifted light may also be called "non-shifted light". Moreover, the unshifted light may exit the acousto-optic modulator and travel towards a direction that is different compared to the direction towards which the shifted light is directed as it exits the modulator to travel towards the retroreflector. Therefore, the shifted light and the unshifted light which are being outputted by the modulator in the second exemplary embodiment, may form corresponding beams which form an angle with respect to each other, and this angle may be called "deflection angle".

In the second exemplary embodiment, the unshifted light that is also outputted by the acousto-optic modulator when the device is in operation, may be utilized as a secondary optical output of the device. That secondary optical output may or may not be outputted together with the shifted light that is outputted by the device, as the latter's primary optical output, via the third optical fiber section.

Hence, in an embodiment which is according to the second exemplary embodiment, the device's overall optical output may optionally comprise both at least part of the shifted light and at least part of the unshifted light. For this reason, in a preferred embodiment which is according to the second exemplary embodiment, the retroreflector is further configured to receive the unshifted light and reflect at least part of it back to the acousto-optic modulator which is further configured to transmit the reflected unshifted light towards the second end of the second optical fiber section. In the latter case, the reflected unshifted light that is being transmitted back to the second optical fiber section, may form part of the device's optical output which includes (i.e. comprises) at least part of the shifted light and can be extracted from the device via the latter's third optical fiber section.

In some embodiments which are also according to the second exemplary embodiment, the device may be configured to output the unshifted light or part of it separately from the shifted light, or to not output the unshifted light at all.

Accordingly, in a preferred embodiment which is according to the aforementioned second exemplary embodiment, the device further comprises an optical block which is configured to receive from the acousto-optic modulator the unshifted light and to block the unshifted light. In another preferred embodiment which is according to the second exemplary embodiment, the device further comprises a mirror which is configured to reflect the unshifted light (L) towards a secondary optical output direction. In another preferred embodiment which is according to the second exemplary embodiment, the device further comprises a fourth optical fiber section and a coupler which is connected or optically coupled to the fourth optical fiber section and is configured to provide (i.e. couple) to the fourth optical fiber section at least part of the unshifted light.

Preferably any or all of the aforementioned optical fiber sections may consist of or comprise one or more corresponding optical fibers. Especially, the first optical fiber section may preferably be, i.e. consist of, a first optical fiber. Similarly, the second optical fiber section may preferably be, i.e. consist of, a second optical fiber. Also, the third optical fiber section may preferably be, i.e. consist of, a third optical fiber. However, it is noted that any of the aforementioned optical fiber sections may comprise additional optical components. For example, in a particular preferred embodiment of the invention, the second optical fiber section may comprise a polarization rotator and two optical fibers which are connected to each other via the polarization rotator such that starting from the first end of the second optical fiber section, the aforementioned components of the second optical fiber section are arranged along the latter in the following order: one of the two optical fibers, the polarization rotator and the other one of the two optical fibers.

In a preferred embodiment of the invention, the fiber beam splitter is polarizing. The optional use of a polarizing fiber beam splitter may advantageously allow for precisely and efficiently managing light based on polarization, and for optimizing the design and performance of the device. Also, as described further above, the optional use of a polarizing beam splitter may optimize or even maximize the amount of light that is eventually sent to (i.e. directed or coupled into), and can be extracted via, the third optical fiber section during an operation of the device. Also, the polarizing fiber beam splitter may exhibit a high extinction ratio, low insertion loss, and good versatility, and these qualities may be utilized for further improving the potential application of the device in a variety of modern optical systems, from telecommunications to advanced quantum technologies.

In some preferred embodiments of the invention, the retroreflector comprises any of a mirror, a lens, a concave mirror, two or more lenses, two or more mirrors, or a combination of a lens and a mirror. Hence, the retroreflector may be fabricated or assembled via the use of one or more commercially available optical components, such as for example mirrors and lenses, and this may advantageously further facilitate the fabricability of the device, and the reduction of the device's fabrication cost.

In a preferred embodiment of the invention, the acousto-optic modulator is configured to shift the frequency by an adjustable amount. In the latter case, the ability to change the amount of the frequency shift may advantageously improve the versatility of the device in terms of the optical output that the device can offer, and of the applications in which the device may potentially be used.

In a preferred embodiment of the invention, the acousto-optic modulator is drivable by an RF (radio frequency) signal which comprises one or more radio frequencies that determine by how much the acousto-optic modulator shifts the frequency of the light received by the acoustic-optic modulator from the second optical fiber section, and the shifted light comprises one or more frequencies which are shifted compared to the frequency of the light received by the acoustic-optic modulator by respective amounts which are respectively determined by the one or more radio frequencies. In the latter embodiment the use of the different radio frequencies of the RF signal that drives the modulator may advantageously allow for imparting to the device's optical output a plurality of optical bands. This plurality of optical bands may be utilized in a variety of applications, such as for example in optical telecommunications. It is noted that the aforementioned radio frequencies may typically range from around 20 kHz to around 300 GHz.

Additional advantages and features of the invention will become apparent from the detailed description that follows and will be particularly pointed out in the appended claims.

### Brief Description of Drawing

Fig. 1 illustrates a conventional optical frequency shifter of the prior art.
Fig. 2 illustrates a schematic diagram of a preferred embodiment of the invention.
Fig. 3 illustrates a schematic diagram of part of the embodiment of Fig. 2.
Fig. 4 illustrates a schematic diagram of a preferred embodiment of the invention.
Fig. 5 illustrates a schematic diagram of a preferred embodiment of the invention.
Fig. 6 illustrates a schematic diagram of a preferred embodiment of the invention.
Fig. 7 illustrates a schematic diagram of a preferred embodiment of the invention.
Fig. 8 illustrates a schematic diagram of a preferred embodiment of the invention.

### Detailed Description

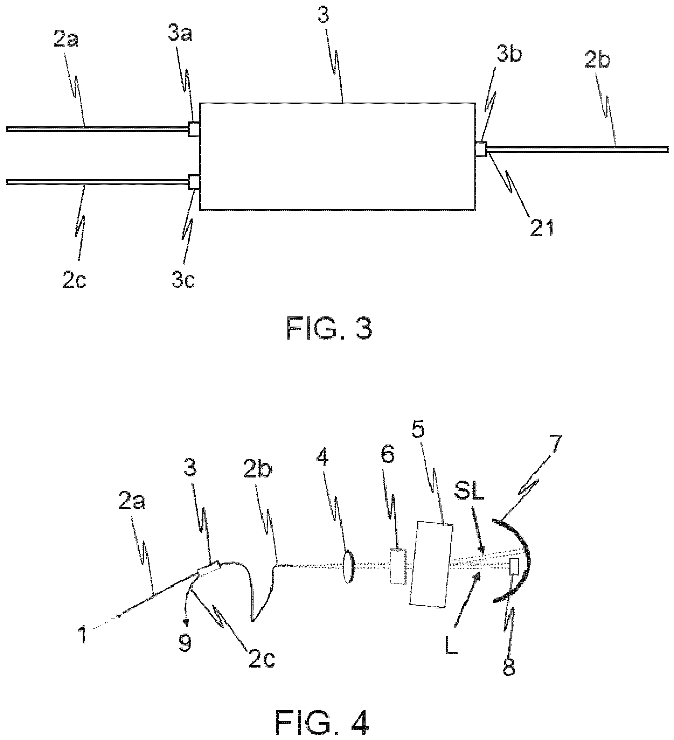

A preferred embodiment of the first aspect of the invention is explained next with reference to Fig. 2 and Fig. 3 which schematically illustrate a fiberized acousto-optic device 20 for shifting a frequency of light 20. The device 20 comprises a first optical fiber section 2a, a fiber beam splitter 3, a second optical fiber section 2b, an acousto-optic modulator 5, a retroreflector 7 and a third optical fiber section 2c. In the device 20 of Fig. 2, the retroreflector 7 is a retro-reflecting mirror. The first optical fiber section 2a is configured to receive light which is an optical input 1 to the device. The fiber beam splitter 3 comprises a first port 3a via which the fiber beam splitter 3 is connected to the first optical fiber section 2a and is configured to receive from the latter the light. Hence, the first optical fiber section 2a is connected to the first port 3a for providing to the fiber beam splitter 3 at least part of the optical input 1. The second optical fiber section 2b comprises a first end 21 which via a second port 3b of the fiber beam splitter 3 is connected to the latter and is configured to receive the light. It is noted that the fiber beam splitter may optionally have more than three ports, e.g. may optionally have four or more ports. The acousto-optic modulator 5 is optically coupled to a second end 22 of the second optical fiber section 2b and is configured to receive from the latter the light and simultaneously shift a frequency of at least a portion of the light, thereby producing shifted light SL, and transmit the shifted light SL towards the retroreflector 7. The retroreflector 7 is optically coupled to the acousto-optic modulator 5 and is configured to receive the shifted light SL and reflect at least part of it back to the acousto-optic modulator 5. The acousto-optic modulator 5 is further configured to transmit at least part of the reflected light towards it receives, towards the second end 22 of the second fiber section. In this way, at least part of the shifted light SL that is reflected by the retroreflector 7 is eventually coupled into the second optical fiber section 2b. Therefore, the second optical fiber section 2b serves for both providing to the acousto-optic modulator the light the frequency or wavelength of which is to be shifted, and for receiving from the acousto-optic modulator at least part of the shifted light SL. Moreover, the second optical fiber section 2b is further configured to receive the transmitted reflected light, i.e. the shifted light that is coupled into the second optical fiber section 2b, and direct it towards the fiber beam splitter 3. The latter is configured to receive the transmitted reflected light and output at least part of the latter via a third port 3c of the fiber beam splitter 3. This light that is outputted via the third port 3c of the fiber beam splitter 3 can become an output signal 9 that the device can provide via the third optical fiber section 2c which is connected to the third port 3c of the fiber beam splitter 3.

Moreover, in the device of Fig. 2 the acousto-optic modulator 5 is further configured to transmit, without shifting the frequency of, some of the light that the acousto-optic modulator receives from the second optical fiber section 2b when the device 20 is in operation. In this way, the acousto-optic modulator 5 of the device 20 also outputs an unshifted light L in addition to the shifted light SL that also exits the modulator. It is noted that the shifted light SL exits the modulator 6 at a different direction compared to the direction of the unshifted light L that also exits the modulator towards the retroreflector 7. That is because, as indicated by the dotted lines of Fig. 2, the shifted light SL is deflected by a deflection angle with respect to the direction of the unshifted light L that exits the modulator 5 towards the retroreflector 7.

The device 20 of Fig. 2 also comprises an optical block 8 which is between the modulator 5 and the retroreflector 7. The block 8 is configured to receive from the acousto-optic modulator 5 the unshifted light L and to block the latter such that it does not contribute to the optical output 9 of the device 20. In an alternative embodiment which is similar to the one of Fig. 2, the device in place of the block 8 comprises an optical coupler and a fourth optical fiber section which is connected to the coupler such that, via the coupler, the unshifted light may be also outputted by the device.

The device of Fig. 2 also comprises a polarization rotator 6 which is at an optical path that is followed by the shifted light SL between the retroreflector and the fiber beam splitter 3. This polarization rotator 6 may cause a change in the polarization of the light that is transmitted through the rotator 6 such that the polarization of the shifted light that is eventually coupled into the second optical fiber section and propagates towards the fiber beam splitter 3 when the device is in operation, is different compared to the polarization of the input light 1 of the device. For this reason, the fiber beam splitter is preferably polarizing and optimized for directing towards the third optical fiber section 2c light of a polarization state that is the same as the polarization state of the light that is outputted by the polarization rotator 6 when the device 20 is in operation.

Also, in the device 20 of Fig. 2, the first optical fiber section 2a consists of a first optical fiber; the second optical fiber section 2b consists of a second optical fiber; and the third optical fiber section 2c consists of a third optical fiber. Also, the device 20 comprises coupling means 4 which is a collimator lens and is configured to optically couple the acousto-optic modulator 5 to the second end 22 of the second optical fiber section 2b. Moreover, the acousto-optic modulator 5 is configured to shift the frequency by an adjustable amount. Also, the retroreflector 7 is a mirror, more specifically a concave mirror. It is noted that in some preferred embodiments, the retroreflector comprises or consists of a cat eye (i.e. cat's eye) retroreflector which comprises a lens and mirror combination.

Another preferred embodiment of the invention is illustrated by Fig. 4. The embodiment of Fig. 4 is similar to the one of Fig. 2, with the difference being that in the embodiment of Fig. 4 the polarization rotator 6 is not between modulator 5 and the retroreflector 7, but instead is between the modulator 5 and the second optical fiber section 2b, and more specifically between the modulator 5 and the colimitation lens that optically couples the second optical fiber section 2b to the acousto-optic modulator 5.

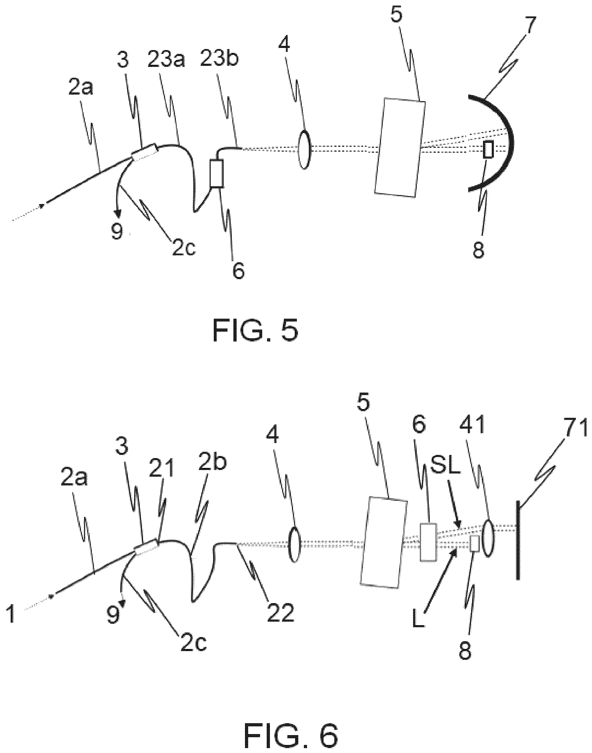

Another preferred embodiment of the invention is illustrated by Fig. 5. The embodiment of Fig. 5 is similar to the one of Fig. 2, with the difference being that in the embodiment of Fig. 5 the polarization rotator 6 is part of the second optical fiber section which, hence, also differs compared to the corresponding one of Fig. 2 in that second optical fiber section of the embodiment of Fig. 5 comprises the polarization rotator and two optical fibers 23a, 23b. A first one 23a of the two optical fibers of the second optical fiber section of the embodiment of Fig. 5 is connected to the fiber beam splitter 3, and the second one 23b of the two fibers is connected to the first one 23a via the polarization rotator 6. This configuration may advantageously improve the robustness and operation stability of the device.

Another preferred embodiment of the invention is illustrated by Fig. 6. The embodiment of Fig. 6 is similar to the one of Fig. 2, with the difference being that in the embodiment of Fig. 6 the retroreflector is not a concave mirror, but instead comprises a lens 41 and a mirror 71.

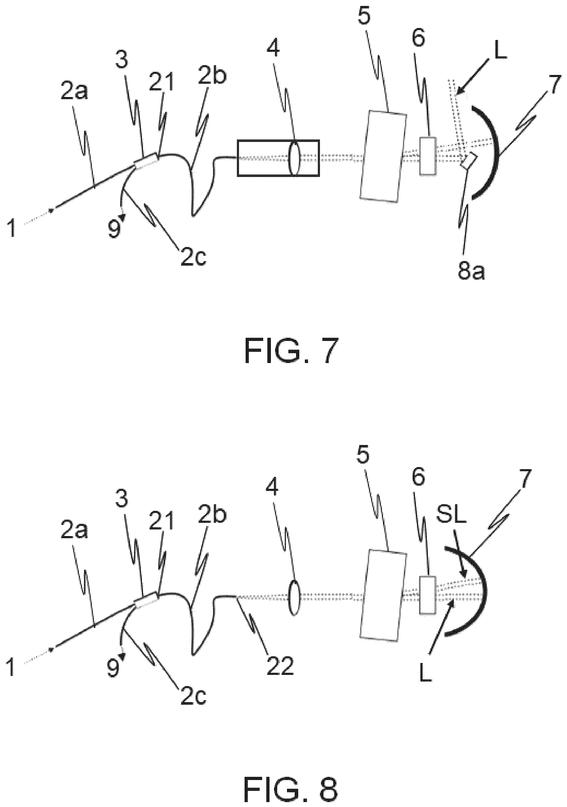

Another preferred embodiment of the invention is illustrated by Fig. 7. The embodiment of Fig. 7 is similar to the one of Fig. 2, with one difference being that in the embodiment of Fig. 7 the device instead of the block 8 comprises a mirror 8b, i.e. a reflector, which is configured to reflect the unshifted light L towards a secondary optical output direction. This way the unshifted (i.e. non-shifted) light may advantageously also be utilized. Also, in the embodiment of Fig. 7 the coupling means 4 is attached to the second optical fiber section 2b.

Another preferred embodiment of the invention is illustrated by Fig. 8. The embodiment of Fig. 8 is similar to the one of Fig. 2, but with one difference being that the embodiment of Fig. 8 does not comprise a block 8 to block the unshifted light L. Consequently, in the embodiment of Fig. 8 at least a portion (i.e. a part) of the unshifted light is also reflected by the retroreflector 7 and is coupled back to the second optical fiber section 2b for forming a part of the output signal 9 of the device.

In this text, the term "comprises" and its derivations (such as "comprising", etc.) should not be understood in an excluding sense, that is, these terms should not be interpreted as excluding the possibility that what is described and defined may include further elements, steps, etc.

While the foregoing is directed to embodiments of the present invention, other and further embodiments of the invention may be devised without departing from the basic scope thereof. Those skilled in the art will understand that the embodiments disclosed here are non-limitative examples, and other embodiments are possible.

## Claims

1. A fiberized acousto-optic device for shifting a frequency of light, comprising:
a first optical fiber section (2a) that is configured to receive light;
a fiber beam splitter (3) which comprises a first port (3a) via which the fiber beam splitter (3) is connected to the first optical fiber section (2a) and is configured to receive from the latter the light;
a second optical fiber section (2b) which comprises a first end (21) which via a second port (3b) of the fiber beam splitter (3) is connected to the latter and is configured to receive the light;
an acousto-optic modulator (5) which is optically coupled to a second end (22) of the second optical fiber section (2b) and is configured to receive from the latter the light and simultaneously shift a frequency of at least a portion of the light, thereby producing shifted light (SL), and transmit towards a retroreflector (7) the shifted light (SL);
the retroreflector (7) which is optically coupled to the acousto-optic modulator (5) and configured to receive the shifted light (SL) and reflect at least part of it back to the acousto-optic modulator (5) which is further configured to transmit at least part of the reflected light towards the second end (22) of the second fiber section;
wherein the second optical fiber section (2b) is further configured to receive the transmitted reflected light and direct it towards the fiber beam splitter (3) which is configured to receive the transmitted reflected light and output at least part of the latter via a third port (3c) of the fiber beam splitter (3);
a third optical fiber section (2c) connected to the third port (3c) of the fiber beam splitter (3).

2. A device according to claim 1, further comprising a polarization rotator (6) at an optical path followed by the shifted light (SL) or the reflected light between the retroreflector and the fiber beam splitter (3).

3. A device according to claim 2, wherein the polarization rotator (6) is between the acousto-optic modulator (5) and the retroreflector (7), or the polarization rotator (6) is between the acousto-optic modulator (5) and the second end (22) of the second optical fiber section (2b).

4. A device according to claim 2, wherein the second optical fiber section (2b) comprises the polarization rotator (6) which is along the second optical fiber section (2b).

5. A device according to any of claims 2-5, wherein the polarization rotator (6) is a waveplate, or a quarter-waveplate or a Faraday rotator.

6. A device according to any of the preceding claims, wherein the acousto-optic modulator (5) is further configured to control an intensity of the shifted light, preferably the acousto-optic modulator being drivable by a radio frequency signal and configured to, according to the frequency signal, dynamically control the intensity of the shifted light via controlling the portion of the light of which the frequency is shifted.

7. A device according to any of the preceding claims, further comprising coupling means (4) configured to optically couple the acousto-optic modulator (5) to the second end (22) of the second optical fiber section (2b), preferably the coupling means (4) comprising any of a lens, a coupling lens, a collimation lens or a mirror.

8. A device according to any of the preceding claims, wherein the acousto-optic modulator (5) is further configured to transmit, without shifting the frequency of, some of the light that the acousto-optic modulator receives from the second optical fiber section (2b) when the device is in operation, thereby the acousto-optic modulator (5) outputting unshifted light (L) in addition to the shifted light (SL).

9. A device according to claim 8, wherein the device further comprises an optical block (8) or mirror (8a) or coupler which is configured to receive from the acousto-optic modulator (5) the unshifted light (L) and to, respectfully, block the unshifted light (L) or reflect the unshifted light (L) towards a secondary optical output direction or couple at least part of the unshifted light to a fourth optical fiber section that the device comprises when the latter comprises the coupler.

10. A device according to claim 8, wherein the retroreflector (7) is further configured to receive the unshifted light (L) and reflect at least part of it back to the acousto-optic modulator (5) which is further configured to transmit the reflected unshifted light (L) towards the second end (22) of the second optical fiber section (2b).

11. A device according to any of the preceding claims, wherein the first optical fiber section (2a) is a first optical fiber, and/or the second optical fiber section (2b) is a second optical fiber, and/or the third optical fiber section (2c) is a third optical fiber.

12. A device according to any of the preceding claims, wherein the acousto-optic modulator (5) is configured to shift the frequency by an adjustable amount.

13. A device according to any of the preceding claims, wherein the fiber beam splitter (3) is polarizing.

14. A device according to any of the preceding claims, wherein the retroreflector (7) comprises any of a mirror (71), a lens (41), a concave mirror, or a combination of a lens (41) and a mirror (71).

15. A device according to any of the preceding claims, wherein the acousto-optic modulator (5) is drivable by an RF signal which comprises one or more radio frequencies that determine by how much the acousto-optic modulator (5) shifts the frequency of the light received by the acoustic-optic modulator from the second optical fiber section (2b), and the shifted light (SL) comprises one or more frequencies which are shifted compared to the frequency of the light received by the acoustic-optic modulator by respective amounts which are respectively determined by the one or more radio frequencies.
